# EUROPEAN PATENT SPECIFICATION

(11) **EP 0 355 420 B1**
(45) Date of publication and mention of the grant of the patent: **06.10.1993**
(21) Application number: 89113437.1
(22) Date of filing: 21.07.1989
(51) Int. Cl.: H01M 8/24, H01M 8/06

(54) **Solid electrolyte fuel cell**
Brennstoffzelle mit einem festen Elektrolyten
Pile à combustible à électrolyte solide

(30) Priority: 23.07.1988 JP 184132/88; 22.08.1988 JP 207898/88; 05.09.1988 JP 221545/88; 01.11.1988 JP 276532/88; 12.04.1989 JP 92736/89; 11.05.1989 JP 118302/89; 29.05.1989 JP 135610/89; 08.06.1989 JP 147291/89
(43) Date of publication of application: 28.02.1990
(73) Proprietor: FUJI ELECTRIC CO., LTD., Kawasaki-shi Kanagawa 210 (JP)
(72) Inventor: Nakanishi, Tsuneo Fuji Electric Co., Ltd., Kawasaki-shi Kanagawa (JP); Koseki, Kazuo Fuji Electric Co., Ltd., Kawasaki-shi Kanagawa (JP); Maruyama, Shinichi c/o Fuji Electric Co., Ltd., Kawasaki-shi Kanagawa (JP); Shundo, Hiroyuki c/o Fuji Electric Co., Ltd., Kawasaki-shi Kanagawa (JP)
(74) Representative: Grünecker, Kinkeldey, Stockmair & Schwanhäusser Anwaltssozietät

(56) References cited:
- EP-A- 0 289 226
- WO-A-86/06762
- WO-A-86/06762
- FR-A- 2 432 774
- GB-A- 1 197 496
- US-A- 3 432 353
- US-A- 3 526 548
- US-A- 3 718 506
- US-A- 4 490 445
- US-A- 4 644 751
- PATENT ABSTRACTS OF JAPAN, vol. 11, no. 306 (E-546)[2753], 6th October 1987; & JP-A-62 98 567 (HITACHI LTD) 08-05-1987
- PATENT ABSTRACTS OF JAPAN, vol. 11, no. 83 (E-489)[2530], 13th March 1987; & JP-A-61 237 370 (ISHIKAWAJIMA HARIMA HEAVY IND. CO.) 22-10-1980
- PATENT ABSTRACTS OF JAPAN, vol. 12, no. 273 (E-639)[3120], 29th July 1988; & JP-A-63 53 863 (MITSUBISHI HEAVY IND., LTD) 08-03-1988

## Description

The present invention relates to a solid electrolyte fuel cell that converts the free energy of a solid electrolyte to electrical energy by an electrochemical reaction and, in particular, to the reliability, operating characteristics and thermal efficiency of such a cell.

### Description of the Related Art

Conventional power generators which employ heat engines such as gas turbines and diesel engines are subject to Carnot cycle efficiency limits. In contrast, the efficiency of fuel cells is dependent on the relationship between the change in the free energy of the underlying electrochemical reaction and the enthalpy of that reaction, and hence is expected to be higher than the efficiency of conventional power generators. Because of this advantage, the use of fuel cells as power generators will contribute to efficient utilization of resources and to a relative decrease in the level of CO₂ emissions and an extremely low level of NOₓ emissions. Fuel cells therefore hold much promise as a powerful means for curbing the aggravation of the environment by air pollution.

A fuel cell consists of an electrolyte plate sandwiched between two electrodes, the oxygen electrode (cathode) and the fuel electrode (anode). Oxygen or air is supplied to the oxygen electrode whereas hydrogen, a reformed gas obtained by reforming (or processing) hydrocarbons such as natural gas, methanol and petroleum, or coal gas is supplied to the fuel electrode. The supplied oxygen combines electrochemically with the hydrogen in the fuel to produce both electricity and water. Fuel cells can be classified by electrolyte and the four predominant types developed so far comprise alkali electrolyte fuel cells, phosphoric acid electrolyte fuel cells, molten carbonate electrolyte fuel cells, and solid electrolyte fuel cells. Solid electrolyte fuel cells make use of solid oxides and are operated at temperatures of 900 - 1,000°C.

In a solid electrolyte fuel cell, oxygen ions (0²⁻) migrate through a porous ceramic electrolyte such as yttria stabilized zirconia (ZrO₂-Y₂O₃).
The reaction occurring at the oxygen electrode is:

1/2O₂ + 2e⁻ = O²⁻ (1).

The reaction taking place at the fuel electrode are:

H₂ + O²⁻ = H₂O + 2e⁻ (2)

CO +O²⁻ = CO₂ + 2e⁻ (3).

The overall reactions in the cell are:

1/2O₂ + H₂ = H₂O (4)

1/2O₂ + CO = CO₂ (5).

One major advantage of solid electrolyte fuel cells is that CO can be directly used as a fuel as it would be in the case of molten carbonate electrolyte fuel cells, so that reformed gases obtained by reforming hydrocarbon fuels such as natural gas, methanol and petroleum can be directly supplied to the cell without being passed through a CO converter. Even the fuel reformer (or processor) can be eliminated since the high operating temperature (1,000°C) combined with the use of Ni as the fuel electrode material enables the fuel gas to be reformed within the cell. This feature offers the added advantage that the fuel supply system for solid electrolyte fuel cells is much simpler in construction than those for other types of fuel cells. Furthermore, the temperature of the gas discharged from solid electrolyte fuel cells is high enough to expand the scope of applications of the heat of the exhaust gases.

The structure of single cells in solid electrolyte fuel cells may be roughly divided into two types. One is a cylindrical type that is described in U.S. Patent No. 3,460,991, or in the 1983 National Fuel Cell Seminar, Nov. 13-16, 1983, Oakland, Florida, p. 78 and/ or in 1985 Fuel Cell Seminar, May 19-22, 1985, Tucson, Arizona, p. 95. The other type is a flat or planar one that is described in U.S. Patent No. 3,554,808, or U.S. Patent No. 4,490,445 or 1983 National Fuel Cell Seminar, ibid., p. 74. Solid electrolyte fuel cells which are basically composed of ceramic materials are mechanically brittle and are prone to failure on account of the thermal stress that would be produced by thermal expansion mismatch and nonuniformity in power generation by the cell. These problems have long prevented the development of practically feasible models of solid electrolyte fuel cells. However, as the above-cited U.S. patents show, electrode and separator materials having thermal expansion coefficients substantially the same as those of electrolyte materials were discovered and this led to the fabrication of experimental cells and the conducting of power generation tests on these cells. In particular, the cell system described in 1983 National Fuel Cell Seminar, Nov. 13-16, 1983, Oakland, Florida, p. 78, is designed for circumventing thermal expansion and provides higher reliability for single cells. However, the individual cells in this system are connected by a nickel felt pad which is not capable of complete thermal expansion absorption. In addition, current will flow along the surfaces of thin electrodes and the resulting increase in resistance (ohmic) loss will lead to lower power densities.

Among the planar type cells proposed to date, the one reported in 1983 National Fuel Cell Seminar Nov. 13-16, Oakland, Florida, p. 74, is of a monolithic design constructed by sintaring an assembly of an electrolyte, electrodes and a separator and features the ability to produce an extremely high output power density. However, not only does this system require a sophisticated fabricating technique but it also is substantially incapable of circumventing thermal expansion, thus making it impossible to fabricate a device of large size. In other words, a limited scope of utility is the major defect of this cell design. The fuel cell described in U.S. Patent No 4,490,445 comprises single cells which are held between ribbed separator plates and which are each fabricated by sintering an assembly of electrodes (0.076 - 0.127 mm 0.003 - 0.005 inch) coated on opposite sides of a thin disk (0.254 - 0.508 mm 0.01 - 0.02 inch) of ZrO₂-Y₂O₃ which serves as an electrolyte. In the absence of a tight gas seal, this call design is capable of circumventing the thermal expansion of individual cells.

However, in the fuel cell described above, the reactant gases flow diametrically along the principal surfaces of single cells, so the travel path of the reactant gases tends to become longer and the resulting increase in their concentration gradient leads to a greater degree of nonuniformity in the cell output distribution on the cell surfaces.

In WO 86/06762, one gas manifold is provided on the periphery of a solid electrolyte fuel cell. The cell comprises an electrolyte plate made of ceramics and an interconnector plate made of metal. The plates are alternatively interposed with each other.

In JP-A-62 98567, a melting carbonate fuel cell which is relatively easy to seal is disclosed. Manifolds are provided on the periphery of the cell. The fuel supply inlet is disposed in the center of the cell.

It is therefore an object of the present invention to provide a solid electrolyte fuel cell in which the individual components are adapted to be freely slidable with respect to one another and the travel path of reactant gases is made sufficiently short to circumvent thermal failure of the cell components in the face of temperature changes encountered by the fuel cell, thereby ensuring improved reliability and operating characteristics and an improved thermal efficiency by making use of the heat of combustion of the gas to be discharged from the cell.

This object is solved by the features of claim 1.

Preferred embodiments are disclosed by the dependent claims.

The single cells may be formed either of self-supporting thin sheets or as membranes that are supported on a substrate. Self-supporting single cells do not use a supporting substrate. The same applies to the reactant gas distributing means and there may be either a porous substrate having a separator plate or guide vanes which both are in the form of a self-supporting dense thin sheet, or a porous or dense substrate having a dense separator membrane on one principal surface and guide vanes on the other principal surface. The manifolds supply a fuel gas to the anode of each single cell or allow a fuel gas to be discharged after the reaction. Furthermore, the manifolds apply an oxidant gas to the cathode of each single cell or allow the oxidant gas to be discharged after the reaction. The manifolds may be formed of reactant gas pipes or alternatively, they may be formed by interconnecting reactant gas passage holes that are formed across the thickness of the superposed single cells and reactant gas distributing means. The guide vanes in the reactant gas distributing means allow the reactant gases to be displaced to the area between the central and peripheral portions of each single cell. The reactant gases may flow in various ways by following, for example, a linear, serpentine or spiral path. The gas sealing guide vane may be provided in the outer-most peripheral portion of the reactant gas distributing means in order to ensure that the reactant gases will not be discharged to the surroundings of the cell stack comprising the superposed single cells and reactant gas distributing means. If reactant gas discharge slits are provided, the reactant gases can be discharged to the surroundings of the cell stack. A gas seal need not be provided for the entire portion of the single cells and reactant gas distributing means and may instead be provided in selected areas by means of glass O-rings. Sealing may be provided by an adhesive for ceramics in place of glass O-rings. If the reactant gases are discharged to the surroundings of the cell stack, a combustion flame will develop in the flame chamber around the cell stack. In this case, the fuel gas reformer and the oxidant or reactant gas inlet pipe can be heated by making use of the heat of the combustion flame. If no reactant gases are to be discharged into the flame chamber around the cell stack, the discharged gases are collected by the manifolds and allowed to react in the combustion chamber isolated from the stack chamber.

The reactant gases are directed by the reactant gas distributing means to flow between the central manifolds and the peripheral portion of the distributing means, and this obviates the need to provide an overall gas seal between the individual components of the fuel cell. A gas seal may be provided in selected areas near to the manifolds. The reactant gases flow between the central and peripheral portions of the reactant gas distributing means and this shorter travel path of the reactant gases effectively reduces the concentration gradient of these gases. The reactant gases discharged from the cell stack are burnt by reacting with each other either between the flame barrier and the cell stack or within the combustion chamber partitioned from the cell stack, and the resulting heat of combustion may be effectively used.

### BRIEF DESCRIPTION OF THE DRAWINGS:

Figs. 1(A) and 1(B) show a porous substrate with a separator membrane for integration in a cell stack according to a first example of the present invention, with Fig. 1(A) being a plan view and Fig. 1(B) being a cross section as viewed in the direction indicated by arrow 1A-1A in Fig. 1(A);
Figs. 2(A) and (B) show a porous substrate with a single cell for integration in a cell stack according to the first example of the present invention, with Fig. 2(A) being a plan view and Fig. 2(B) being a cross section as viewed in the direction indicated by arrow 2A-2A in Fig. 2(A);
Fig. 3 shows a cross-section of a cell stack according to the first example of the present invention;
Figs. 4(A) and 4(B) are enlarged views of portion A of Fig. 3, with Fig. 4(A) being a cross-section showing the state before heating and Fig. 4(B) showing the state after heating;
Figs. 5(A) and 5(B) show a cell stack according to a second example of the present invention, with Fig. 5(A) being a cross-section and Fig. 5(B) being a plan view as viewed in the direction indicated by arrow 5A-5A in Fig. 5(A);
Figs 6 (A) and 6(B) show a cell stack adopting a modified design of guide vanes, with Fig. 6(A) being a plan view and Fig. 6(B) being a cross-section as viewed in the direction indicated by arrow 6A-6A in Fig. 6(A);
Fig. 7 shows a cross-section of a cell stack adopting a modified design of gas seal;
Fig. 8 shows a cross-section of a cell stack adopting another modification of gas seal;
Fig. 9 shows a cross-section of a solid electrolyte fuel cell having a combustion chamber according to a third example of the present invention;
Figs. 10(A) and 10(B) show a solid electrolyte fuel cell adopting a modified design of combustion chamber, with Fig. 10(A) being a cross-section; and Fig. 10(B) being a plan view as seen in the direction indicated by arrow 10A-10A in Fig. 10(A);
Figs. 11(A) and 11(B) show a porous substrate with a separator membrane for integration in a cell stack according to a fourth example of the present invention, with Fig. 11(A) being a plain view and Fig. 11(B) being a cross-section as viewed in the direction indicated by the arrow 11A-11A in Fig. 11(A);
Figs. 12(A) and 12(B) show a porous substrate with a single cell for integration in a cell stack according to the fourth example of the present invention, with Fig. 12(A) being a plan view and Fig. 12(B) being a cross-section as viewed in the direction indicated by arrow 12A-12A in Fig. 12(A) and
Fig. 13 is a partial longitudinal section of a solid electrolyte fuel all having a combustion chamber according to a fifth example of the present invention.

### DETAILED DESCRIPTION OF PREFERRED EMBODIMENTS

Examples of the present invention are described hereunder with reference to the accompanying drawings.

### Example 1

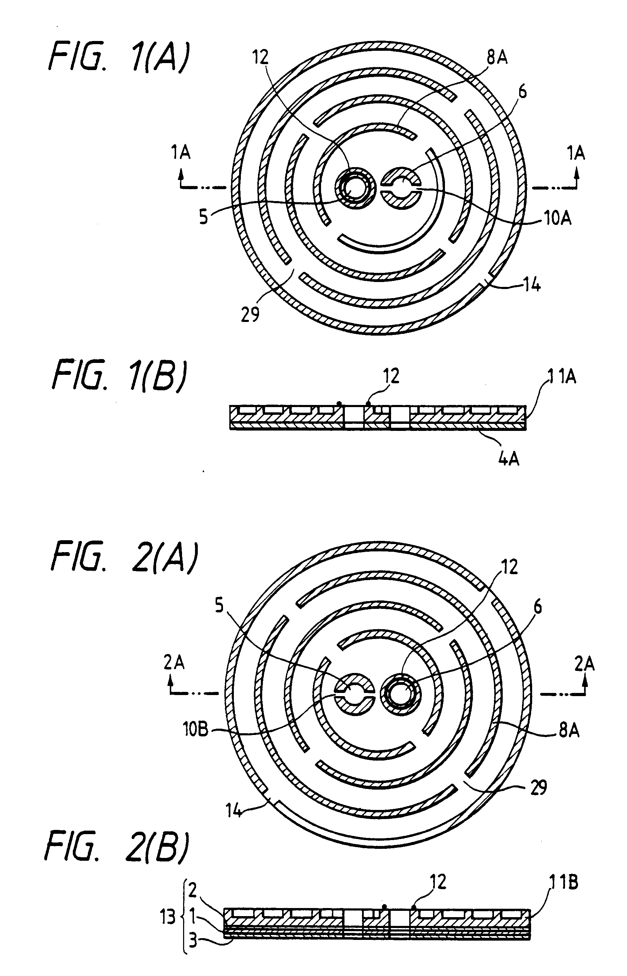

Figs. 1(A) and 1(B) show a porous substrate with a separator membrane for integration in a cell stack according to a first example of the present invention. Fig. 1(A) is a plan view and Fig. 1(B) is a cross-section as viewed in the direction indicated by arrow 1A-1A in Fig. 1(A). The porous substrate 11A (reactant gas distributing means) is formed of lanthanum manganite (LcMnO₃). the separator membrane 4A is formed of a dense lanthanum chromite (LaCrO₃) layer. The separator membrane 4A is also part of the reactant gas distributing means. A manifold 6, through which an oxidant gas is supplied, and a manifold 5, through which a fuel gas is supplied, are provided as reactant gas passage holes in the central area of the porous substrate 11A with the separator membrane. Reactant gas supply slits 10A are formed in the oxidant gas supply manifold 6. The porous substrate 11A is provided with ribbed guide vanes 8A for directing the oxidant gas, slits 29 for radially guiding the oxidant gas, and a reactant gas discharge slit 14 through which the oxidant gas is to be discharged. Fitting around the ribs, which form the fuel gas supply manifold, is a gas sealing glass O-ring 12.

Figs. 2(A) and 2(B) show a porous substrate with a single cell for integration in a cell stack according to the first example of the present invention. Fig. 2(A) is a plan view and Fig. 2(B) is a cross-section as viewed in the direction indicated by arrow 2A-2A in Fig. 2(A). The porous substrate 11B (reactant gas distributing means) is formed from a nickel-zirconia (Ni -ZrO₂) cermet. The single cell 13 is formed on the porous substrate 11B. The single cell 13 is composed of a solid electrolyte 1 made of yttria (Y₂O₃) stabilized dense zirconia, an anode 2 made of a porous Ni-ZrO₂ cermet, and a cathode 3 made of porous lanthanum manganite. An oxidant gas supply manifold 6 and a fuel gas supply manifold 5 are provided in the central area of the porous substrate 11B with single cell 13. Reactant gas supply slits 10B are formed in the fuel gas supply manifold 5. The porous substrate 11B is furnished with ribbed guide vanes 8A for directing the fuel gas, slits 29 for radially guiding the fuel gas, and reactant gas discharge slits 14 through which the fuel gas is to be discharged. Fitted around the ribs on the substrate which form the oxidant gas supply manifold 6 is a gas sealing glass O-ring 12.

The porous substrate 11A equipped with a separator membrane may be fabricated by the following method: a porous substrate with ribbed guide vanes that measures 300 mm x 300 mm x 2 mm is provided, and lanthanum chromite is densely plasma sprayed onto a flat major surface of this substrate to form the separator membrane 4A in a thickness of 40 µm. The porous substrate 11B equipped with a single cell may be fabricated by the following method: a porous substrate measuring 300 mm x 300 mm x 2 mm is provided, and a Ni-ZrO₂ cermet is loosely plasma sprayed onto a flat principal surface of this substrate to form the porous anode 2 in a thickness of 100 µm. Zirconia stabilized with yttria is thermal-sprayed onto the anode 2 to form the dense solid electrolyte 1 in a thickness of 30 µm. Subsequently, lanthanum manganite is plasma-sprayed to form the porous cathode 3 in a thickness of 800 µm. A dense, rather than porous, substrate may be fabricated using lanthanum manganite. In this case, too, a dense separator membrane formed of lanthanum chromite is necessary since lanthanum manganite is reduced in a reducing atmosphere.

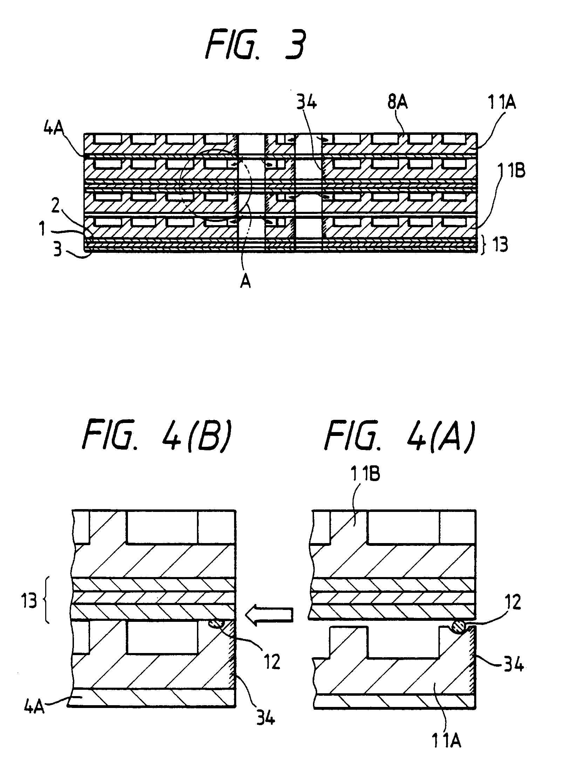

Fig. 3 shows a cross section of a cell stack in which the porous substrate 11A of Fig. 1(b) with a separator membrane and the porous substrate 11B of Fig. 2(b) with a single cell are alternately superposed one on another. Reactant gases are supplied through the reactant gas supply slits 10A and 10B in the directions indicated by arrows. The arrows on the right hand side show the streams of the oxidant gas, and those on the left-hand side show the streams of the fuel gas. By superposing the four substrates, the reactant gas passage holes are interconnected to form manifolds through which parallel flows of the respective reactant gases are supplied to the reactant gas distributing means.

Fig. 4 is an enlarged view of portion A of Fig. 3, Fig. 4(A) is a cross-section showing the state before heating, and Fig. 4(B) after heating. Upon heating, the glass O-ring 12 is fused to provide a liquid seal. The ribs on the substrate around which the glass O-ring 12 is fitted have a filling or clogging portion 34 formed of a ceramic cement or some other suitable material on their inner surfaces.

The oxidant gas is admitted into the porous substrate 11A formed of lanthanum manganite. The oxidant gas, as guided by the guide vane 8A and slits 29, flows in a serpentine path toward the peripheral portion of the substrate 11A to be distributed to the cathode 3 of each single cell. The fuel gas, on the other hand, is admitted into the porous substrate 11B formed of a Ni-ZrO₂ cermet. The fuel gas flows in the same way as does the oxidant gas and is thus distributed to the anode 2 of each single cell. The separator membrane 4A prevents contact between the oxidant and fuel gases. The electromotive force (0.5 - 0.9 volts) generated in one single cell by an electrochemical reaction is added to the electromotive force generated in the other single cell connected in series to the first cell. The porous substrate 11A made of lanthanum manganite, the separator 4A made of lanthanum chromite and the porous substrate 11B made of a Ni-ZrO₂ cermet have electronic conductivity and permit a current to flow through a series circuit.

The separator membrane 4A, which has been formed by thermal spraying, is joined physically to the porous substrate 11A and this allows the two members to slide freely on each other by thermal expansion or contraction. The same is true with the relationship between the single cell 13 and the porous substrate 11B, and with the relationship between the anode 2, solid electrolyte 1 and cathode 3 of which the single cell is composed. Even if the porous substrate 11A with a separator membrane is alternately superposed on the porous substrate 11B with a single cell to make a cell stack, the separator membrane 4A (or single cell 13) and the porous substrate 11B or 11A are capable of freely sliding on each other by thermal expansion or contraction in response to a change in the temperature of the cell stack. This is because the reactant gases can be directed radially to the space between the central and peripheral portions of the reactant gas distributing means by merely stacking the porous substrate 11A with a separator membrane on the porous substrate 11B with a single cell. The gas seal provided by the glass O-rings 12 is limited to selected areas in the neighborhood of the manifolds formed in the porous substrates 11A and 11B. As already mentioned, the gas seal provided by the glass O-rings becomes a liquid seal upon heating and will hence be inert to the thermal expansion or contraction that might be experienced by the individual components of the cell stack. In addition, the reactant gases flow radially over a short path. This offers a great benefit to the case where the separator 4A and single cell 13 are formed on substrates because in such a "support membrane system" the travel path of reactant gases becomes inevitably long in order to enable cell stacking over a large area. After the reaction, the reactant gases are discharged from the periphery of the cell stack and burnt.

### Example 2

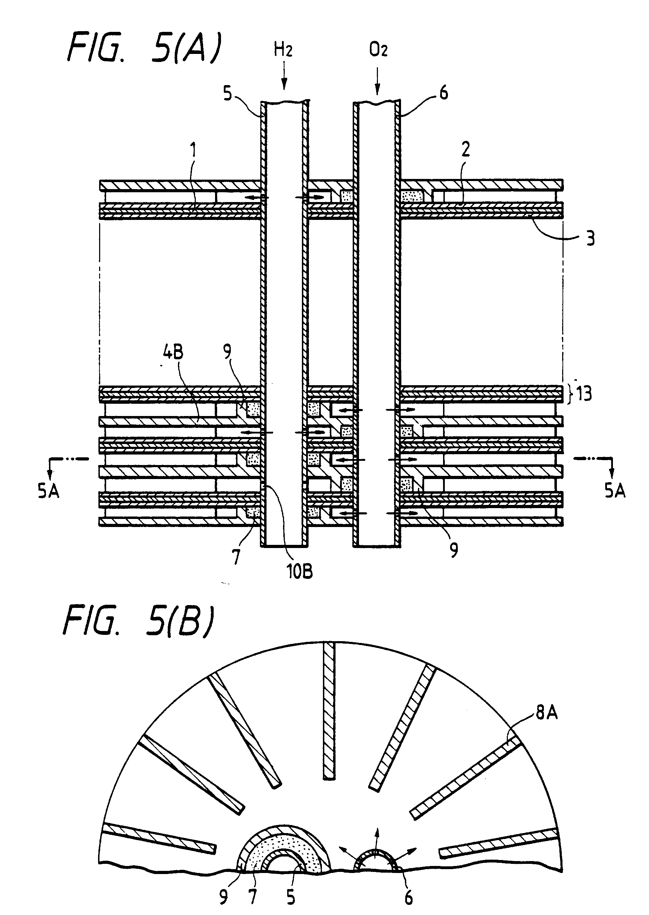

Fig. 5 shows a cell stack according to a second example of the present invention. Fig. 5(a) is a cross-section and Fig. 5(b) is a plan view as seen in the direction indicated by arrows C in Fig. 5(a). A fuel gas (hydrogen) is introduced into a separator plate 4B (reactant gas distributing means) by way of the fuel gas supply manifold 5. A reactant gas (oxygen) is introduced through the oxidant gas supply manifold 6 to be admitted into the separator plate 4B which is a self-supporting thin plate. The oxidant gas and the fuel gas are separately directed to the two principal surfaces of the separator plate 4B via reactant gas supply holes 10B. The reactant gas supply manifolds are reactant gas pipes that are made of zirconia stabilized with yttria (Y₂O₃).

The separator plate 4B is made of lanthanum chromite (LaCrO₃) and sauntered densely to give a thickness of 0.5 - 2 mm. Lanthanum chromite has electronic conductivity and will not be oxidized even if it is placed in an oxidizing atmosphere. A further advantage of lanthanum chromite is that it shows a thermal expansion coefficient close to that of yttria-stabilized zirconia. Single cells 13 are connected in series by this lanthanum chromite. Guide vanes 8A are provided on the two principal surfaces of the separator plate 4B. The guide vanes 8A direct the reactant gases to flow from the central area of the separator plate 4B toward its peripheral area. The oxidant gas thus reaches the cathode 3 of each single cell whereas the fuel gas reaches the anode 2 of the single cell.

The solid electrolyte 1 is a self-supporting thin plate having a thickness of 50 - 500 µm that is formed of yttria stabilized zirconia. Anode 2 and cathode 3 are baked to the two principal surfaces of the solid electrolyte 1. Anode 2 is made of Ni-ZrO₂ and its thickness is selected from the range of 0.01 - 1 mm. Lanthanum manganite is used as the active material of cathode 3. Both the anode and cathode are formed as porous structures.

A fuel cell with the construction described above has the advantage that the single cells 13 and separator plates 4B need not be provided with a gas seal and may be simply stacked alternately one on another. This permits the single cells 13 to freely slide on the separator plates 4B during thermal expansion without developing any thermal stress. The gaps left between each of the reactant gas supply manifolds 5 and 6 and the walls of through-holes made in the single cells 13 and separator plate 4B may be filled by providing seal walls 9 on the separator plates 4B and by forming a ceramic sealing portion 7 between the seal walls 9 and each of the reaction gas supply manifolds 5 and 6. The thermal stress that may be generated by the sealing portion 7 is so small that the thermal stress to be developed by the overall system will remain small. The reactant gases reaching the peripheral portion of the reactant gas distributing means are combusted in the sealing portion 7 to ensure that the temperature of the fuel cell is maintained at a predetermined high level.

The single cells as shown in Fig. 5 are of a disk shape but they may be otherwise shaped such as rectangular. The guide vanes 8A may also be designed in such a way that maximum cell characteristics can be attained by taking the concentration gradient of reactant gases into account.

The reactant gas supply manifolds 5 and 6 may be integrated into a single entity. In this case, the separate streams of two reactant gases will flow through the single reactant gas supply manifold, with the attendant advantage of reduction in the number of through-holes to be formed in the substrates.

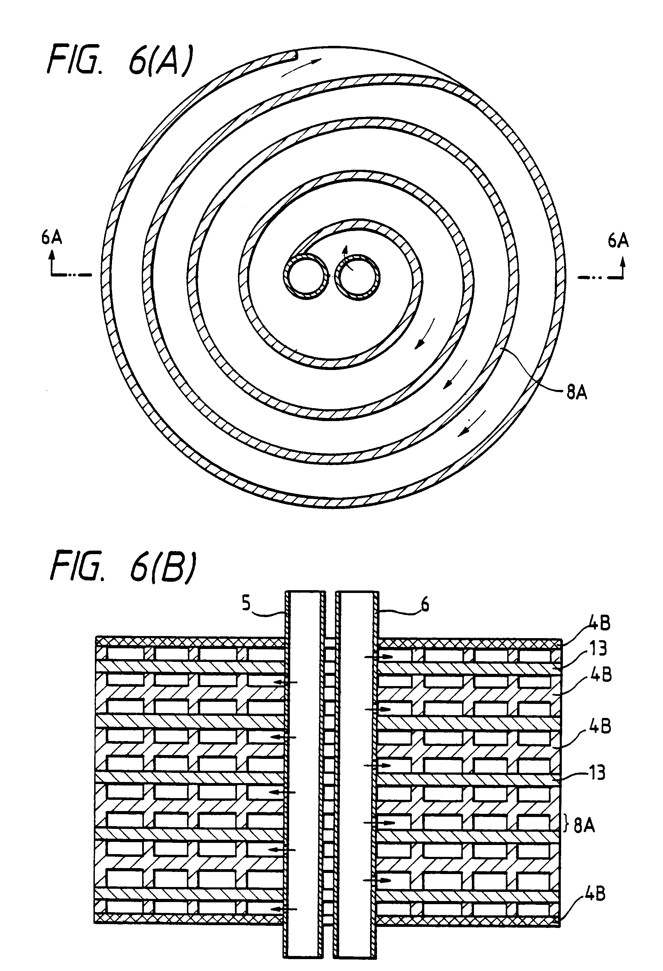

Figs. 6(A) and 6(B) show a cell stack adopting a modified design of guide vanes 8A. Fig. 6(A) is a plan view and Fig. 5(A) is a cross section as viewed in the direction indicated by arrow 6A-6A in Fig. 6(A). The guide vanes 8A are formed as spiral coils. The pitch between adjacent turns of the spiral is selected at an optimum value which depends upon the diameter of the cell stack. The major advantage of this design is that the reactant gases can be admitted uniformly into the single cells 13 and that the discharged gases can be collected in one place.

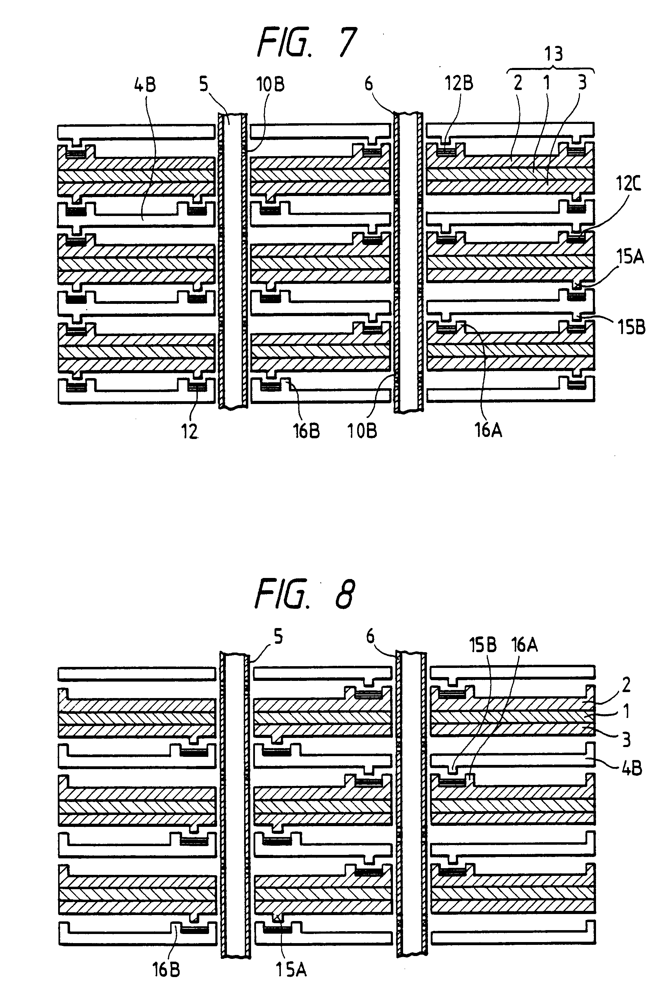

Fig. 7 shows a cross-section of a cell stack adopting a modified design of a gas seal. Each of the single cells 13 has an anode 2 and cathode 3 superposed on a circular solid electrolyte 1 and can be stacked alternately on circular separator plates 4B. A fuel gas supply manifold 5 and an oxidant gas supply manifold 6, which are both reactant gas pipes, are provided through the cell stack. A fuel gas discharge manifold and an oxidant gas discharge manifold, which make another pair of reactant gas pipes, are also provided through the cell stack but are not shown in Fig. 7.

The anode 2 of each single cell is provided with a glass reservoir 16A, in which a glass O-ring 12B is fitted. The cathode 3 of each single cell is provided with a projection 15A. A glass reservoir 16B is formed on the upper surface of each separator plate 4B whereas a projection 15B is formed on its lower surface.

A solid electrolyte fuel cell of the design described above may be fabricated by the following procedures. First, the circular solid electrolyte 1 (100 - 500 µm thick) is formed from yttria-stabilized zirconia. The solid electrolyte 1 has through-holes for insertion of the fuel gas supply manifold, oxidant gas supply manifold, fuel gas discharge manifold, and oxidant gas discharge manifold. A Ni-ZrO₂ cermet is thermal-sprayed onto one principal surface of the solid electrolyte 1 to form a porous anode 2 in a thickness of 100 µm. Lanthanum manganite is sputtered onto the other principal surface of the solid electrolyte 1 to form a porous cathode 3 in a thickness of 50 - 200 µm. Glass reservoir 16A, which resembles a gasket in shape and has a groove for storing glass, is press molded from a Ni-ZrO₂ cermet and fired at a temperature of 1,000°C. The separator plates 4B are press molded from lanthanum chromite into a form having not only through-holes for insertion of a fuel gas supply manifold and the other necessary manifolds but also glass reservoir 16B and projection 15B. The molding is then fired to form a dense structure.

Glass O-rings 12B and 12C are fitted in glass reservoirs 16A and 16B, respectively. The O-rings are formed of a soda lime glass having a melting point of 900°C and a working temperature of 1,000°C. The single cells 13 are alternately superposed on the separator plates 4B and the fuel gas supply manifold and the other necessary manifolds are set within the through-holes. The operating temperature of the fuel cell is maintained at 1,000°C for a sufficient duration of time to have the glass reservoir 16A and projection 15A baked to the anode 2 and cathode 3, respectively, of each single cell. The glass O-rings 12B and 12C are fused to enable liquid sealing. The fuel and oxidant gases that have undergone the reaction are discharged through the associated discharge manifolds (not shown). The discharged gases are not burnt around the cell stack, but instead are reacted within an isolated combustion chamber.

When the cell operation ends, the glass from which the O-rings are made solidifies but the soda lime glass having a greater linear expansion coefficient than zirconia and other electrode materials represents such a relatively small portion of the space in the glass reservoirs 16A and 16B that it will not cause cracking damage in the other components of the cell.

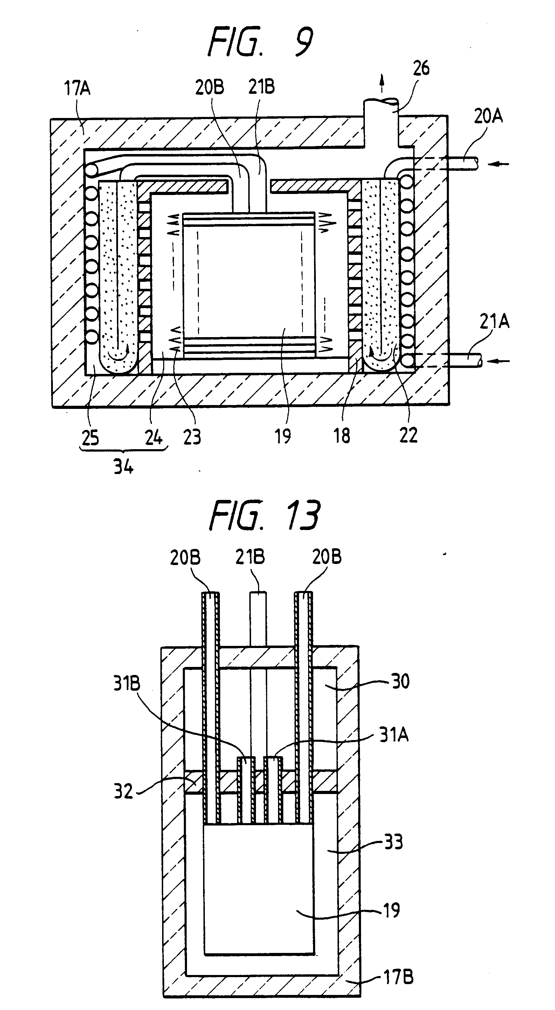

Fig. 8 shows a cross section of a cell stack adopting another modification of the gas seal. In the absence of reactant gas discharge manifolds, gas sealing need not be effected around the cell stack. The discharged gases are burnt around the cell stack.

### Example 3

FIG. 9 shows a cross-section of a solid electrolyte fuel cell having a combustion chamber according to a third example of the present invention. The combustion chamber 34 is provided around the cell stack. A natural gas (fuel gas) and steam are introduced from a pipe 20A and proceed down a fuel reformer 22, make a U-turn at the bottom, ascend to the top and enter a cell stack 19 via another fuel gas inlet pipe 20B. In this process, the natural gas is heated in a preheating chamber 25 and reformed to hydrogen, CO, and CO₂ with the aid of the catalyst in the fuel reformer. The temperature suitable for reforming is within the range 700-850°C, so that satisfactory reforming can be accomplished with the discharged gases or combustion gases from the fuel cell of the present invention which operates in the temperature range of 900 -1,000°C. Air, as an oxidant gas, flows spirally around the fuel reformed by passing through a route that starts with an oxidant gas inlet pipe 21A and ends with another oxidant gas inlet pipe 21B and in this process, the air is preheated to a temperature close to the operating temperature of the cell and introduced into the cell from above the central portion of the cell stack 19.

The respective reaction gases react with each other within the cell stack and the unreacted hydrogen and oxygen, together with the product water, are discharged into a flame chamber 24 that surrounds the cell stack. The discharged H₂, O₂ and H₂O mix in the flame chamber 24 and are burnt to form a combustion flame 23. A flame barrier 18 is disposed in such a way that the fuel reformer 22 will not be directly heated with the flame. On the other hand, the flame barrier 18 has small holes in it to provide a minimum barrier against heat. The combustion gases, i.e., steam, carbon dioxide and nitrogen, are cooled in the preheating chamber 25 and recovered from the cell stack through a discharged gas vent 26. Even after being cooled in the preheating chamber 25, the discharged gases are still hot enough so that they may be utilized to produce lukewarm water.

The vessel of the fuel reformer and the oxidant gas inlet pipes 21A and 21B may suitably be formed of a heat resistant alloy such as Incoloy 800H, whereas the flame barrier 18, may suitably be formed of a thin refractory brick or alumina. The cell stack 19, flame chamber 24, flame barrier 18 and preheating chamber are encased in a heat insulator 17A.

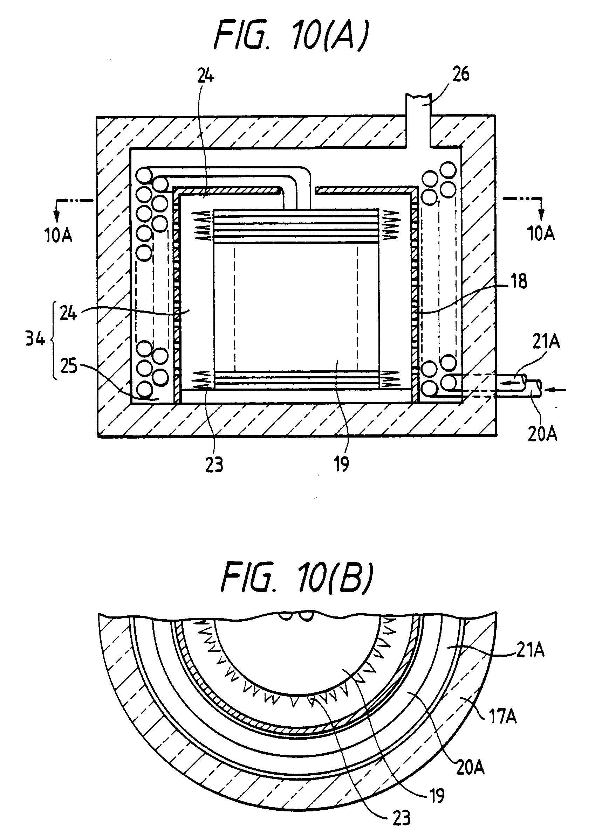

Figs. 10(A) and 10(B) show a solid electrolyte fuel cell adopting a modified design of combustion chamber. Fig. 10(A) is a cross section and Fig. 10(B) is a plan view as seen in the direction indicated by arrow 10A-10A in Fig. 10(A). The fuel gas inlet pipe 20A and the oxidant gas inlet pipe 21A are heated in the preheating chamber 25.

### Example 4

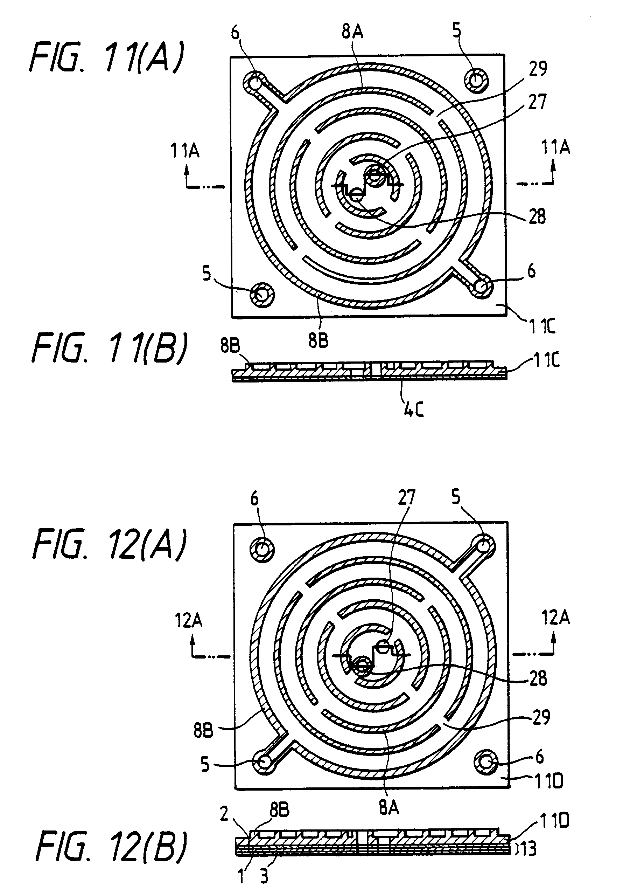

Figs. 11(A) and 11(B) show a porous substrate 11C with a separator membrane for integration in a cell stack according to a fourth example of the present invention. Fig. 11(A) is a plan view and Fig. 11(B) is a cross section as viewed in the direction indicated by arrow 11A and 11A in Fig. 11(A). The porous substrate 11C has oxidant gas supply manifolds 6 and fuel gas supply manifolds 5 which are formed in the four corners of the substrate, as well as a fuel gas discharge manifold 27 and an oxidant gas discharge manifold 28 which are both formed in the central area of the substrate. The substrate is also provided with ribbed guide vanes 8A for directing the oxidant gas from the central area of the substrate to its peripheral area, and a ribbed guide vane 8B for providing a gas seal. The constituent materials of the separator 4C and porous substrate 11C and the processes for fabricating them are essentially the same as those described in connection with the porous substrate 11A with a separator membrane shown in Fig. 1.

Figs. 12(A) and 12(B) show a porous substrate with a single cell for integration in a cell stack according to the fourth example of the prevention invention. Fig. 12(A) is a plan view and Fig. 12(B) is a cross-section as viewed in the direction indicated by arrow 12A-12A in Fig. 12(A). The constituent materials of the single cell 13 and porous substrate 11D and the processes for fabricating them are essentially the same as those described in connection with the porous substrate 11B with a single cell shown in Fig. 2.

The porous substrate 11C with a separator membrane and the porous substrate 11D with a single cell are alternately superposed one on another to form a cell stack 19 as shown in Fig. 13.

### Example 5

Fig. 13 is a partial longitudinal section of a solid electrolyte fuel cell having a combustion chamber according to a fifth example of the present invention. The fuel gas passes through a fuel gas inlet pipe 20B, the fuel gas supply manifold 5 shown in Figs. 11(A) and 12(A), the fuel gas discharge manifold 27 shown in Figs. 11(A) and 12(A), and a fuel gas outlet pipe 31B. The oxidant gas passes through an oxidant gas inlet pipe 21B, the oxidant gas supply manifold 6 shown in Figs. 11(A) and 12(A), the oxidant gas discharge manifold 28 shown in Figs. 11(A) and 12(A), and an oxidant gas outlet pipe 31A.

The discharged gases are burnt in a combination chamber 30. The heat of combustion is used to heat the fuel gas inlet pipe and the oxidant gas inlet pipe so as to preheat the reaction gases flowing through these pipes. The combustion chamber 30 is isolated from a stacking compartment 33 by a fire retarding wall 32. The combustion chamber 30 and the stacking compartment 33 are encased in a heat insulator 17B. The reactant gases are preheated before they are admitted into the stack 19 and this is effective in preventing thermal failure from occurring in the ceramic materials of which the fuel cell is made. In addition, the temperature of the single cells in the fuel cell system is maintained at a predetermined high level to improve its characteristics.

## Claims

1. A solid electrolyte fuel cell stack having a solid electrolyte composed of ceramic materials and comprising a plurality of superposed planar single cells (13;19;1,2,3) each having a cathode (3) and an anode (2) disposed on the two principle surfaces of the solid electrolyte substrate (1) and having superposed thereon reactant gas distributing means (4A,4B,11A,11B,11C,11D;8A,8B) for supplying individually two reactant gases, an oxidant gas and a fuel gas, to the two electrodes (2,3) of each single cell (13), said reactant gas distributing means having guide vane means (8A,8B) for directing the reactant gases into the space between a central portion of each single cell and a peripheral portion of each single cell, said distributing means comprising means for establishing electrical connection to the single cells (13), said fuel cell including manifolds (5,6,27,28) which penetrate through the central area of the superposed single cells to supply flows of the oxidant and the fuel gases to be supplied to or discharged from the anode (2) and cathode (3) of each single cell (13) via the reactant gas distributing means, and a gas sealing glass member (7,12,12b) provided at the central area of the superposed sigle cells.

2. A solid electrolyte fuel cell of claim 1 **characterized by** the gas distributing means (4A,4B,11A,11B,11C,11D;8A, 8B) further comprising a reactant gas discharge slit (14) in the peripheral portion for allowing the reactant gases to be discharged; manifolds (20B,21B) penetrating the superposed single cells (13,19) and reactant gas distributing means to supply the flows of reactant gases to and to exhaust reactant gases from, the reactant gas distributing means; a flame barrier (18) disposed around the superposed single cells (13,19) except for portions of said manifolds to block a combustion flame (23) that is generated from the reactant gases exhausted from said reactant gas distributing means; and a heat insulator (17a) accommodating all of said fuel cell, including said flame barrier (18) and forming preheating chamber (25) about said accepted portions of said manifolds.

3. The solid electrolyte fuel cell of claim 1 **characterized in that** the guide vane means (8A,8B) including the guide vane means (8B) in the peripheral portion for sealing the reactant gases; manifolds (20B,21B,31A,31B) penetrating through the superposed single cells (13,19) and a reactant gas distributing means to supply and discharge the flows of reactant gases to and from the distributing means inwards of the reactant gas sealing guide vane means (8B); and a combustion chamber (30) for combusting the discharge reactant gases, said combustion chamber comprising a flame retardent wall (31) partitioning the superposed sigle cells (13,19) therefrom.

4. A solid electrolyte fuel cell according to claim 1, 2 or 3 in which the manifolds (5,6,27,28) include manifolds in the form of reactant gas pipes.

5. A solid electrolyte fuel cell according to claim 1, 2 or 3 in which the manifolds (5,6,27,28) include manifolds in the form of reactant gas passage holes.

6. A solid electrolyte fuel cell according to claim 1, 2 or 3 in which the guide vane means (8A,8B) includes guide vane means for directing the reactant gases in a linear path.

7. A solid electrolyte fuel cell according to claim 1, 2 or 3 in which the guide vane means (8A,8B) includes guide vane means for directing the reactant gases in a serpentine path.

8. A solid electrolyte fuel cell according to claim 1, 2 or 3 in which the guide vane means (8A,8B) includes guide vane means for directing the reactant gases in a spiral path.

9. A solid electrolyte fuel cell according to claim 1, 2 or 3 in which the plurality of superposed single cells (13) comprise self-supporting single cells in a thin sheet form.

10. A solid electrolyte fuel cell according to claim 1, 2 or 3 in which the plurality of superposed single cells (13) comprise single cells in membrane form supported on substrates.

11. A solid electrolyte fuel cell according to claim 1, 2 or 3 in which the reactant gas distributing means 4A, 4B, 11A, 11B, 11C, 11D has the form of self-supporting, dense, thin sheets (4A,4B).

12. A solid electrolyte fuel cell according to claim 1, 2 or 3 in which the reactant gas distributing means 4A,4B,11A,11B,11C,11D comprising a porous substrate (11A-D) with guide vanes (8A,B) and a substrate that supports a dense separator membrane (4A,4B) on one principal surface and that has guide vanes on the other principal surface.

13. A solid electrolyte fuel cell according to claim 1, 2 or 3 which includes gas-sealing glass O-rings (12,12B,12C).

14. A solid electrolyte fuel cell according to claim 1, 2 or 3 which includes gas-sealing ceramic sealing portions (7).

15. A solid electrolyte fuel cell according to claim 1 in which the reactant gas distributing means has reactant gas discharge slits (14) in the peripheral portion of each single cell (13).

16. A solid electrolyte fuel cell according to claim 1 in which the guide vane means includes guide vane means (8B) for sealing the reactant gases in the peripheral portion of the reactant gas distributing means, and manifolds (5,6) that penetrate through the superposed single cells (13) and reactant gas distributing means in their respective peripheral portions and inward of each said gas sealing guide vane means (8B).

17. A solid electrolyte fuel cell according to claim 2 which includes a fuel gas reformer (22) and an oxidant gas inlet (21A) pipe in the preheating chamber (25).

18. A solid electrolyte fuel cell according to claim 2 which includes reactant gas inlet pipes (20A) in the preheating chamber (25).

19. A solid electrolyte fuel cell according to claim 3 which includes reactant gas inlet pipes (20B,21B) connecting to the manifolds (5, 6) and penetrating through the interior of the combustion chamber (30), and reactant gas outlet pipes (31A,31B) connecting to the manifolds (27,28) and having open ends inserted into the combustion chamber (30).

## Patentansprüche

1. Ein Brennstoffzellenstapel mit einem festen aus keramischen Materialien zusammengesetzten Elektrolyten und einer Vielzahl von übereinander angeordneten, ebenen Einzelzellen (13; 19; 1, 2, 3), von denen jede eine Kathode (3) und eine Anode (2) auf Hauptebenen des festen Elektrolytsubstrates (1) und auf diesen angeordnete Verbrennungsgasverteilungseinrichtungen (4A, 4B, 11A, 11B, 11C, 11D; 8A, 8B) zur individuellen Zuführung zweier Reaktionsgase, eines Sauerstoffträgergases und eines Brenngases, zu den beiden Elektroden (2, 3) einer jeden Einzelzelle (13) aufweist, wobei die Verbrennungsgaszuführeinrichtung Führungsflächen (8A, 8B) zum Leiten der Verbrennungsgase in den Raum zwischen einem Zentralbereich einer jeden Einzelzelle und einem Randbereich einer jeden Einzelzelle aufweist, die Verteilungseinrichtung weiterhin eine Einrichtung zum Herstellen einer elektrischen Verbindung zu den Einzelzellen (13) aufweist, die Brennstoffzelle ein Leitungssystem (5, 6, 27, 28) aufweist, welches einen Zentralbereich der übereinander angeordneten Einzelzellen durchdringt, um das Sauerstoffträgergas der Anode (2) und Kathode (3) einer jeden Einzelzelle (13) zu- bzw. von dieser die Verbrennungsgasverteilungseinrichtung abzuführen, und mit einem Glasbauteil (7, 12, 12b) zum Abdichten des Gases, welches im Zentralbereich der übereinander geordneten Einzelzellen angeordnet ist.

2. Ein Brennstoffzellenstapel mit festem Elektrolyt nach Anspruch 1, **dadurch gekennzeichnet,** daß die Gasverteilungseinrichtung (4A, 4B, 11A, 11B, 11C, 11D; 8A, 8B) einen Verbrennungsgasauslaßschlitz (14) in einem Randbereich zum Ausgeben der Verbrennungsgase aufweist; das Leitungssystem (20B, 21B) die übereinander angeordneten Einzelzellen (13, 19) und die Verbrennungsgasverteilungseinrichtungen durchdringt, um die Verbrennungsgase der Verbrennungsgasverteilungseinrichtung zuzuführen und von dieser abzufübren; eine Flammensperre (18) um die übereinander angeordneten Einzelzellen (13, 19) außer um Bereiche des Leitungssystems angeordnet ist, um eine Verbrennungsflamme (23) abzublocken, welche durch die von der Verbrennungsgasverteilungseinrichtung abgegebenen Verbrennungsgasen erzeugt wird; und eine die Brennstoffzelle einschließlich der Flammensperre (18) umgebende Wärmeisolation (17a), die eine Vorheizkammer (25) um die von der Flammensperre ausgenommenen Bereiche des Leitungssystems zu bilden.

3. Ein Brennstoffzellenstapel mit festem Elektrolyt nach Anspruch 1, **dadurch gekennzeichnet,** daß die Führungsflächen (8A, 8B) eine Führungsfläche (8B) im Randbereich zum Abdichten der Verbrennungsgase aufweisen; das Leitungssystem (20B, 21B, 31A, 31B) die übereinander angeordneten Einzelzellen (13, 19) und eine Verbrennungsgasverteilungseinrichtung durchdringt, um Verbrennungsgase der Verteilungseinrichtung innerhalb der das Verbrennungsgas abdichtenden Führungsfläche (8B) zu- und von dieser abzuführen; und eine Verbrennungskammer (30) zum Verbrennen der abgegebenen Verbrennungsgase, welche eine flammenzurückhaltende Wand (31) aufweist, die die übereinander angeordneten Einzelzellen (13, 19) von dieser trennt.

4. Eine Brennstoffzelle mit festen Elektrolyten nach Anspruch 1, 2 oder 3, **dadurch gekennzeichnet,** daß das Leitungssystem (5, 6, 27, 28) ein Leitungssystem in Form von Verbrennungsgasrohren aufweist.

5. Brennstoffzelle mit festen Elektrolytgen nach Anspruch 1, 2 oder 3, **dadurch gekennzeichnet,** daß das Leitungssystem (5, 6, 27, 28) ein Leitungssystem in Form von Verbrennungsgasdurchgangsöffnungen aufweist.

6. Brennstoffzelle mit festen Elektrolyten nach Anspruch 1, 2 oder 3, **dadurch gekennzeichnet,** daß die Führungsflächen (8A, 8B) Führungsflächen zum Leiten der Verbrennungsgase entlang eines linearen Weges aufweisen.

7. Brennstoffzelle mit festen Elektrolyten nach Anspruch 1, 2 oder 3, **dadurch gekennzeichnet,** daß die Führungsflächen (8A, 8B) eine Führungsfläche zum Führen der Verbrennungsgase entlang eines serpentinenartigen Weges aufweist.

8. Brennstoffzelle mit festen Elektrolyten nach Anspruch 1, 2 oder 3, **dadurch gekennzeichnet,** daß die Führungsflächen (8A, 8B) eine Führungsfläche zum Leiten der Verbrennungsgase entlang eines spiralförmigen Weges aufweist.

9. Brennstoffzelle mit festen Elektrolyten nach Anspruch 1, 2 oder 3, **dadurch gekennzeichnet,** daß die Vielzahl der übereinander angeordneten Einzelzellen (13) selbsttragende Einzelzellen in Form dünner Scheiben aufweisen.

10. Brennstoffzelle mit festen Elektrolyten nach Anspruch 1, 2 oder 3, **dadurch gekennzeichnet,** daß die Vielzahl der übereinander angeordneten Einzelzellen (13) als Einzelzellen in Form von auf einem Substrat angeordneten Membranen ausgebildet sind.

11. Brennstoffzelle mit festen Elektrolyten nach Anspruch 1, 2 oder 3, **dadurch gekennzeichnet,** daß die Verbrennungsgasverteilungseinrichtung (4A, 4B, 11A, 11B, 11C, 11D) als selbsttragende, dichte, dünne Bleche (4A, 4B) ausgebildet sind.

12. Brennstoff mit festen Elektrolyten nach Anspruch 1, 2 oder 3, **dadurch gekennzeichnet,** daß die Verbrennungsgasverteilungseinrichtung (4A, 4B, 11A, 11B, 11C, 11D) aus einem porösen Substrat (11A bis 11D) mit Führungsflächen (11A, 11B) und einem Substrat gebildet sind, welches eine dichte Trennmembran (4A, 4B) auf einer Hauptebene aufweist und auf dem die Führungsflächen auf der anderen Hauptebene angeordnet sind.

13. Brennstoffzelle mit festen Elektrolyten nach Anspruch 2 oder 3, **gekennzeichnet durch** gasabdichtende O-Ringe (12, 12B, 12C) aus Glas.

14. Brennstoffzelle mit festen Elektrolyten nach Anspruch 1, 2 oder 3, **gekennzeichnet durch** gasabdichtende, keramische Dichtbereiche (7).

15. Brennstoffzelle mit festen Elektrolyten nach Anspruch 1, **dadurch gekennzeichnet,** daß die Verbrennungsgasverteilungseinrichtung einen Verbrennungsgasauslaßschlitz (14) in einem Randbereich einer jeden Einzelzelle (13) aufweist.

16. Brennstoffzelle mit festen Elektrolyten nach Anspruch 1, **dadurch gekennzeichnet,** daß die Führungsflächen eine Führungsfläche (8b) zum Abdichten der Verbrennungsgase im Randbereich der Verbrennungsgasverteilungseinrichtung aufweist und das Leitungssystem (5, 6) die übereinander angeordneten Einzelzellen (13) und die Verbrennungsgasführungseinrichtung in den entsprechenden Randbereichen und innerhalb einer jeden das gasabdichtenden Führungsfläche (8B) durchdringt.

17. Brennstoffzelle mit festen Elektrolyten nach Anspruch 2, **gekennzeichnet durch** einen Brenngasreformer (22) und einem Sauerstoffträgergaseinlaß (21A), welche in der Vorheizkammer (25) angeordnet sind.

18. Brennstoffzelle mit festen Elektrolyten nach Anspruch 2, **dadurch gekennzeichnet,** daß eine Verbrennungsgaseinlaßleiung (20A) in der Vorheizkammer (25) angeordnet ist.

19. Brennstoffzelle mit festen Elektrolyten nach Anspruch 3, **dadurch gekennzeichnet,** daß Brennstoffgaseinlaßleitungen (20B, 21B) mit dem Leitungssystem (5, 6) verbunden sind und das innere der Verbrennungskammer (30) durchdringen und Verbrennungsgasauslaßrohre (31A, 31B) mit dem Leitungssystem (27, 28) verbunden sind und offene, in die Verbrennungskammer (30) eingesetzte Enden aufweisen.

## Revendications

1. Empilement de piles à combustible à électrolyte solide, comprenant un électrolyte solide composé de matériaux céramiques et comportant plusieurs piles planes uniques superposées (13 ; 19 ; 1, 2, 3) ayant chacune une cathode (3) et une anode (2) disposées sur les deux surfaces principales du substrat (1) d'électrolyte solide et ayant des dispositifs superposés (4A, 4B, 11A, 11B, 11C, 11D ; 8A, 8B) de distribution de gaz réactifs pour la transmission individuelle de deux gaz réactifs, un gaz oxydant et un gaz combustible, aux deux électrodes (2, 3) de chaque pile unique (13), les dispositifs de distribution de gaz réactifs ayant des ailettes (8A, 8B) de guidage destinées à diriger les gaz réactifs dans l'espace compris entre une partie centrale de chaque pile unique et une partie périphérique de chaque pile unique, les dispositifs de distribution comprenant un dispositif destiné à établir une connexion électrique avec les piles uniques (13), la pile à combustible ayant des collecteurs (5, 6, 27, 28) qui traversent la zone centrale des piles uniques superposées et assurent la circulation des gaz oxydant et combustible qui doivent être transmis à l'anode (2) et à la cathode (3) de chaque pile unique (13) et évacués de celles-ci par l'intermédiaire des dispositifs de distribution de gaz réactifs, et un organe de verre (7, 12, 12b) de scellement placé dans la région centrale des piles uniques superposées.

2. Pile à combustible à électrolyte solide selon la revendication 1, caractérisée en ce que les dispositifs de distribution de gaz (4A, 4B, 11A, 11B, 11C, 11D ; 8A, 8B) comportent en outre une fente de distribution (14) de gaz réactifs dans la partie périphérique destinée à permettre l'évacuation des gaz réactifs, des collecteurs (20B, 21B) traversant les piles uniques superposées (13, 19) et les dispositifs de distribution de gaz réactifs afin que les courants de gaz réactifs soient transmis aux dispositifs de distribution de gaz réactifs et que les gaz réactifs soient évacués de ces dispositifs de distribution, un barrage (18) d'arrêt de flamme placé autour des piles uniques superposées (13, 19) sauf dans les parties des collecteurs afin qu'une flamme de combustion (23) créée à partir des gaz réactifs évacués des dispositifs de distribution de gaz réactifs soit arrêtée, et un isolateur thermique (17a) logeant toute la pile à combustible et comprenant le barrage (18) d'arrêt de flamme et formant une chambre de préchauffage (25) autour des parties de collecteur qui sont logées.

3. Pile à combustible à électrolyte solide selon la revendication 1, caractérisée en ce que les ailettes (8A, 8B) de guidage comportent des ailettes de guidage (8B) placées dans la partie périphérique et destinées à retenir les gaz réactifs, des collecteurs (20B, 21B, 31A, 31B) traversant les piles uniques superposées (13, 19), et des dispositifs de distribution de gaz réactifs, destinés à transmettre les courants de gaz réactifs dirigés vers ces dispositifs de distribution et à évacuer ces courants de ces dispositifs, vers l'intérieur des ailettes (8B) de guidage retenant les gaz réactifs, et une chambre (30) de combustion des gaz réactifs évacués, la chambre de combustion comprenant une paroi retardatrice de flamme (31) séparant les piles uniques superposées (13, 19).

4. Pile à combustible à électrolyte solide selon la revendication 1, 2 ou 3, dans laquelle les collecteurs (5, 6, 27, 28) comportent des collecteurs sous forme de tubes destinés aux gaz réactifs.

5. Pile à combustible à électrolyte solide selon la revendication 1, 2 ou 3, dans laquelle les collecteurs (5, 6, 27, 28) comportent des collecteurs sous forme de trous de passage de gaz réactifs.

6. Pile selon la revendication 1, 2 ou 3, dans laquelle les ailettes de guidage (8A, 8B) comprennent des ailettes destinées à diriger les gaz réactifs suivant un trajet rectiligne.

7. Pile à combustible à électrolyte solide selon la revendication 1, 2 ou 3, dans laquelle les ailettes de guidage (8A, 8B) comportent des ailettes destinées à diriger les gaz réactifs suivant un trajet sinueux.

8. Pile à combustible à électrolyte solide selon la revendication 1, 2 ou 3, dans laquelle les ailettes de guidage (8A, 8B) comportent des ailettes destinées à diriger les gaz réactifs suivant un trajet spiralé.

9. Pile à combustible à électrolyte solide selon la revendication 1, 2 ou 3, dans laquelle les piles uniques superposées (13) sont des piles uniques cohérentes placées sous forme d'une feuille mince.

10. Pile à combustible à électrolyte solide selon la revendication 1, 2 ou 3, dans laquelle les piles uniques superposées (13) sont des piles uniques sous forme de membranes supportées par des substrats.

11. Pile à combustible à électrolyte solide selon la revendication 1, 2 ou 3, dans laquelle les dispositifs (4A, 4B, 11A, 11B, 11C, 11D) de distribution de gaz réactifs ont la forme de minces feuilles denses et cohérentes (4A, 4B).

12. Pile à combustible à électrolyte solide selon la revendication 1, 2 ou 3, dans laquelle les dispositifs (4A, 4B, 11A, 11B, 11C, 11D) de distribution de gaz réactifs comprennent un substrat poreux (11A-11D) ayant des ailettes de guidage (8A, 8B) et un substrat qui supporte une membrane séparatrice dense (4A, 4B) sur une face principale et qui a des ailettes de guidage sur l'autre face principale.

13. Pile à combustible à électrolyte solide selon la revendication 1, 2 ou 3, qui comporte des joints toriques de verre (12, 12B, 12C) d'étanchéité au gaz.

14. Pile à combustible à électrolyte solide selon la revendication 1, 2 ou 3, qui comporte des parties céramiques (7) d'étanchéité au gaz.

15. Pile à combustible à électrolyte solide selon la revendication 1, dans laquelle les dispositifs de distribution de gaz réactifs comportent des fentes (14) d'évacuation de gaz réactifs à la partie périphérique de chaque pile unique (13).

16. Pile à combustible à électrolyte solide selon la revendication 1, dans laquelle les ailettes de guidage comportent des ailettes de guidage (8B) destinées à retenir de manière étanche les gaz réactifs dans la partie périphérique des dispositifs de distribution de gaz réactifs, et des collecteurs (5, 6) qui passent à travers les piles uniques superposées (13) et les dispositifs de distribution de gaz dans leurs parties périphériques respectives et vers l'intérieur de chacune des ailettes de guidage d'étanchéité (8B).

17. Pile à combustible à électrolyte solide selon la revendication 2, qui comporte un organe de reformage (22) de gaz combustible et un tube d'entrée (21A) de gaz oxydant dans la chambre de préchauffage (25).

18. Pile à combustible à électrolyte solide selon la revendication 2, qui comprend des tubes d'entrée (20A) de gaz réactifs dans la chambre de préchauffage (25).

19. Pile à combustible à électrolyte solide selon la revendication 3, qui comporte des tubes d'entrée (20B, 21B) de gaz réactifs raccordés aux collecteurs (5, 6) et traversant l'intérieur de la chambre de combustion (30), et des tubes de sortie (31A, 31B) de gaz réactifs raccordant les collecteurs (27, 28) et ayant des extrémités ouvertes introduites dans la chambre de combustion (30).
